# EUROPEAN PATENT APPLICATION

(11) **EP 3 739 676 A1**
(43) Date of publication of application: **18.11.2020**
(21) Application number: 18921355.6
(22) Date of filing: 27.06.2018
(51) Int. Cl.: H01M 4/36, H01M 4/62, H01M 4/131, H01M 10/052

(54) **SLURRY FOR POSITIVE ELECTRODE OF SECONDARY LITHIUM BATTERY, PREPARATION METHOD FOR SAME, AND APPLICATION THEREOF**

(30) Priority: 04.06.2018 CN 201810563149
(71) Applicant: Guangzhou Tinci Materials Technology Co., Ltd, Guangzhou, Guangdong 510760 (CN)
(72) Inventor: XIE, Tian, Guangzhou, Guangdong 510760 (CN); FAN, Weizhen, Guangzhou, Guangdong 510760 (CN); YU, Le, Guangzhou, Guangdong 510760 (CN); ZHAO, Jingwei, Guangzhou, Guangdong 510760 (CN)
(74) Representative: McCallum, Graeme David
(86) International application number: PCT/CN2018/093176
(87) International publication number: WO 2019/232837

(57) **Abstract**

The present invention relates to a slurry for a positive electrode of a secondary lithium battery, a preparation method for the same, and an application thereof. The slurry for a positive electrode of a lithium secondary battery comprises an active material of the positive electrode, a conductive agent, a binding agent, and an organic solvent. The organic solvent has a structure as shown by formula (I), with R₃ being a C1-C6 alkyl group, R₁ and R₂ being either hydrogen, a C1-C6 alkyl group, or a C1-C6 ether-linked hydrocarbyl group, and Ri and R₂ being capable of binding with the connected nitrogen atom to form a cyclic structure. The slurry of a positive electrode of a secondary lithium battery has superior performance, is environmentally friendly, mild and safe, and causes no irritation, thereby reducing damage to operators, and reducing the burden on the environment.

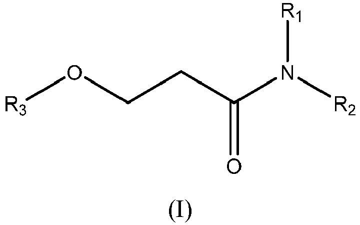

## Description

### TECHNICAL FIELD

The present disclosure relates to the field of electrochemical technology, in particular, to a lithium secondary battery positive electrode slurry, a preparation method and use thereof.

### BACKGROUND

Lithium secondary batteries have advantages of high operating voltage, high specific energy density, long cycle life, low self-discharge rate, no memory effect, low environmental pollution and the like, and are widely used in various consumer electronics and power battery markets.

Currently, a positive electrode slurry for a lithium secondary battery usually contains an active material, a conductive agent, a binder, and an organic solvent. Moreover, since N-methyl pyrrolidone (NMP) has advantages of low viscosity, low volatility, excellent chemical and thermal stability, infinite miscibility with water and other organic solvents and the like, it is widely used as an organic solvent of the positive electrode slurry. However, the thermal decomposition of NMP will produce irritating or toxic gases, which will have a greater impact on the environment or people, and NMP is expensive, which severely limits the use of this type of slurry.

### SUMMARY

Accordingly, it is necessary to provide a green and environmentally friendly lithium secondary battery positive electrode slurry and a preparation method and a use thereof.

A lithium secondary battery positive electrode slurry includes a positive electrode active material, a conductive agent, a binder, and an organic solvent. The organic solvent has a structure as shown in formula (I): 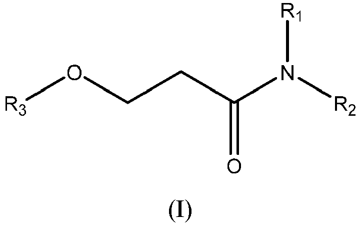 wherein R₃ is C1-C6 alkyl;
R₁ and R₂ are each independently hydrogen, C1-C6 alkyl or C1-C6 ether bond hydrocarbon group; R₁ and R₂ and nitrogen atom connected thereto are capable of being bonded to form a cyclic structure.

Since the aforementioned lithium secondary battery positive electrode slurry adopts the organic solvent having the structure as shown in formula (I), components in the lithium secondary battery positive electrode slurry has good compatibility therebetween, and it is not easy to produce bubbles, particles and the like. Moreover, undesirable phenomenon such as de-powdering or powder falling is not easy to occur during the preparation of the positive electrode sheet, which can ensure the electrochemical property of the prepared positive electrode sheet.

In addition, the lithium secondary battery positive electrode slurry is mild, safe and non-irritating, and has high stability. No irritating or toxic gas is generated during the use, which is green and environmentally friendly.

In one of the embodiments, R₃ is C1-C4 alkyl. R₁ and R₂ are each independently hydrogen, C1-C4 alkyl or C1-C4 ether bond hydrocarbon group.

In one of the embodiments, the organic solvent is at least one selected from the group consisting of 3-methoxy-N, N-dimethylpropionamide, 3-ethoxy-N, N-diethylpropionamide, 3-methoxy-N, N-diethylpropionamide, 3-butoxy-N, N-dimethylpropionamide, and 3-methoxy-N, N-dibutylpropionamide.

In one of the embodiments, in the lithium secondary battery positive electrode slurry, by a weight percent, a content of the positive electrode active material ranges from 96.0% to 97.0%, a content of the conductive agent ranges from 2.0% to 2.5%, and a content of the binder ranges from 0.5% to 2.0%.

In one of the embodiments, the positive electrode active material is a lithium-containing transition metal compound.

The lithium-containing transition metal compound is at least one selected from the group consisting Li₁₊ₐ(NiₓCo_{y}M_{1-x-y})O₂, Li(NiₚMnqCo_{2-p-q})O₄, and LiMe_{b}(PO₄)_{c};
wherein 0≤a≤0.3, 0≤x≤1, 0≤y≤1, 0<x+y≤1, 0≤p≤2, 0≤q≤2, and 0<p+q≤2;
M is Mn or Al;
Me is Fe, Ni, Co, Mn or V; and
0<b<5, 0<c<5.

In one of the embodiments, the conductive agent is at least one selected from the group consisting of acetylene black, graphite conductive agent, carbon black, and carbon nanotube.

In one of the embodiments, the binder is polyvinylidene fluoride.

A method for preparing the lithium secondary battery positive electrode slurry as described above includes the following steps:
mixing the binder with the organic solvent, stirring evenly, and standing still to obtain a colloid;
adding the conductive agent to the colloid, stirring evenly, and then adding the positive electrode active material;
adding the organic solvent to adjust a viscosity to be 5000mPa.s to 7000mPa.s, to obtain a lithium secondary battery positive electrode slurry primary product;
passing the lithium secondary battery positive electrode slurry primary product through a 100-150 mesh sieve, and obtaining the lithium secondary battery positive electrode slurry.

The method for preparing the lithium secondary battery positive electrode slurry as described above is simple, doesn't require special instrument and equipment, which is applicable in the industrial production. Moreover, in this method, the viscosity of the positive electrode slurry is controlled within a certain range by adding each component step-by-step and by selecting appropriate organic solvent, on one hand, which can ensure the intensive mixing between components, on the other hand, which can effectively avoid the generation of bubbles and particles, ensuring the electrochemical property of the prepared lithium secondary battery positive electrode slurry.

In one of the embodiments, the method for preparing the lithium secondary battery positive electrode slurry includes:
Mixing the binder with the organic solvent, stirring them at a speed of 60rpm to 70rpm for revolution, 1200rpm to 1300rpm for autogiration for 6h to 10h, and letting them stand for 3h to 6h to obtain a colloid;
Adding the conductive agent to the colloid, stirring them at a speed of 65rpm to 70rpm for revolution, 1400rpm to 1500rpm for autogiration for 4h to 6h, and then adding the positive electrode active material, stirring them at a speed of 70rpm to 75rpm for revolution, 2100rpm to 2200rpm for autogiration for 3h to 5h;
Adding the organic solvent to adjust a viscosity to be 5000mPa.s to 7000mPa.s, to obtain a lithium secondary battery positive electrode slurry primary product;

Passing the lithium secondary battery positive electrode slurry primary product through a 100-150 mesh sieve, and obtaining the lithium secondary battery positive electrode slurry.

In one of the embodiments, prior to mixing the binder with the organic solvent, the method further includes a step of pre-drying: pre-drying the positive electrode active material and the conductive agent at 150°C to 180°C for 24h to 48h, respectively, and pre-drying the binder at 60°C to 100°C for 20h to 24h.

A use of the lithium secondary battery positive electrode slurry as described above in preparing a lithium secondary battery.

Since the lithium secondary battery positive electrode slurry is non-toxic and non-irritating and no undesirable phenomenon such as significant de-powdering or powder falling occurred during the preparation of the positive electrode sheet, it can be ensured that the prepared lithium secondary battery has good electrochemical property while being green and environmentally friendly, which can significantly reduce the harm to an operator, reduce the environmental burden. Therefore, the lithium secondary battery positive electrode slurry is suitable to prepare the lithium secondary battery.

A lithium secondary battery includes a positive electrode sheet prepared by the lithium secondary battery positive electrode slurry as described above.

The lithium secondary battery including the aforementioned positive electrode sheet prepared by the lithium secondary battery positive electrode slurry is green and environmentally friendly, non-toxic and non-irritating, and has better rate and cycle performance.

### DETAILED DESCRIPTION OF THE EMBODIMENTS

In order to facilitate understanding of the present disclosure, the present disclosure will be described more fully below, and preferred embodiments of the present disclosure are illustrated. However, the present disclosure can be implemented in many different forms, and is not limited to the embodiments described herein. On the contrary, providing these embodiments is to assist understanding of the disclosure of the present disclosure more thorough and comprehensive.

Unless otherwise defined, all technical and scientific terms used herein have the same meaning as commonly understood by those skilled in the technical field of the present disclosure. The terminology used in the description of the present disclosure herein is for describing specific embodiments, and is not intended to limit the present disclosure. The term "and/or" as used herein includes any and all combinations of one or more associated listed items.

The present disclosure will be described in further detail below with reference to examples, but the implementation of the present disclosure is not limited thereto.

### Example 1

### (1) Preparing a positive electrode slurry

1.5% by mass of polyvinylidene fluoride (PVDF) was dissolved in 3-methoxy-N, N-dimethylpropionamide solution to obtain a colloid. 2% by mass of a conductive agent of carbon black was added to the colloid, and stirred to obtain a solution. Then, 96.5% by mass of LiNi_{0.6}Co_{0.2}Mn_{0.2}O₂ was added to the solution and mixed evenly. A viscosity of the positive electrode slurry was controlled to be 5000mPa.s to 7000mPa.s, such that a lithium secondary battery positive electrode slurry of Example 1 was obtained.

### (2) Preparing a positive electrode sheet

After coating the mixed lithium secondary battery positive electrode slurry on both sides of an aluminum foil, it was dried and rolled to obtain a positive electrode sheet with a surface density of 350g/m².

### (3) Preparing a negative electrode sheet

4% by mass of SBR binder and 1% by mass of CMC thickener were dissolved in an aqueous solution to obtain a solution. 95% by mass of graphite was added to the solution, and mixed evenly. After the mixed slurry was coated on both sides of a copper foil, it was dried and rolled to obtain a negative electrode sheet.

### (4) Preparing an electrolyte

In a glovebox in an argon atmosphere (H₂O<1ppm), organic solvents ethylene carbonate, ethyl methyl carbonate, and diethyl carbonate were mixed with a ratio of 1:1:1. 1.0M of LiPF₆ was then added, and well stirred evenly, to obtain an electrolyte.

### (5) Preparing a lithium secondary battery

The prepared positive electrode sheet, the prepared negative electrode sheet, and a diaphragm were wound into a square electrical core. The square electrical core was packaged with a polymer, the electrolyte prepared in step (4) was injected, and a lithium secondary battery with a capacity of 2000mAh was manufactured through formation process and the like.

### Example 2

Example 2 was similar to Example 1, except that the organic solvent in the positive electrode slurry was replaced by 3-ethoxy-N, N-diethylpropionamide.

### Example 3

Example 3 was similar to Example 1, except that the organic solvent in the positive electrode slurry was replaced by 3-methoxy-N, N-diethylpropionamide.

### Example 4

Example 4 was similar to Example 1, except that the organic solvent in the positive electrode slurry was replaced by 3-butoxy-N, N-dimethylpropionamide.

### Example 5

Example 5 was similar to Example 1, except that the organic solvent in the positive electrode slurry was replaced by 3-methoxy-N, N-dibutylpropionamide.

### Comparative Example 1

Comparative Example 1 was similar to Example 1, except that the organic solvent in the positive electrode slurry was replaced by NMP

### Comparative Example 2

Comparative Example 2 was similar to Example 1, except that the organic solvent in the positive electrode slurry was replaced by N, N-dimethylpropionamide.

### Performance Testing

The physicochemical properties of the lithium secondary batteries according to Examples 1 to 5 and Comparative Examples 1 to 2 were respectively tested. The test instruments or methods were as follows:

Slurry viscosity: Brookfield viscometer.

Surface density: a cutting machine was used to cut 9 pieces of sample with a size of 5cm^{∗}5cm at a driving side, a center of an operating side in a width direction when sampling and coating electrode sheets. The samples were placed in an electronic balance to weigh the weight of each piece Valu1 separately. The Valu1 minus the weight average value Value2 of the aluminum coil sample as a raw material to obtain the weight of the sheet in the width direction. Thus, the surface density of the coating=(Valu1-Valu2)/25.

Rolling thickness: NAKNOR battery electrode sheet rolling mill was adopted.

Compacted density: surface density/ (electrode sheet thickness-foil thickness)

Cycle performance test: Charge and discharge cycle tests were conducted on the battery at 1C/1C rate of charge and discharge, respectively, and the cut-off voltage ranges from 3.0V to 4.35V

High temperature storage performance test: firstly, the battery subjected to the formation process was charged and discharged 5 times at 1C rate at normal temperature, and then the battery was fully charged at 1C rate to test an internal resistance, and stored at a high temperature. After the battery is completely cooled, the battery was taken out to test its internal resistance, and conducted to a discharge test at 1C rate.

The test results are shown in Table 1 and Table 2

**Table 1**

| | Slurry viscosity/mPa.s | Surface density/g·m⁻² | Rolling thickness/mm | Compacted density/g·m⁻³ |
|---|---|---|---|---|
| Example 1 | 5789 | 350 | 0.122 | 3.30 |
| Example 2 | 5882 | 350 | 0.122 | 3.31 |
| Example 3 | 5901 | 349 | 0.121 | 3.30 |
| Example 4 | 5768 | 349 | 0.122 | 3.30 |
| Example 5 | 5890 | 350 | 0.122 | 3.30 |
| Comparative Example 1 | 5850 | 351 | 0.123 | 3.31 |
| Comparative Example 2 | 5950 | 349 | 0.123 | 3.29 |

**Table 2**

| | First cycle | | Capacit y retentio n after 500 cycles % | Changes in capacity after being stored at 60°C for 14 days | | Internal resistance mΩ | Change rate of the internal resistance after being stored at 60°C for 14 days % |
|---|---|---|---|---|---|---|---|
| | Discharge capacity mAh | Coulombi c efficiency % | | Capacity retention % | Capacity recovery rate % | | |
| Example 1 | 2011 | 86.5 | 86 | 88 | 95 | 26 | 12 |
| Example 2 | 2003 | 86.2 | 84 | 87 | 95 | 27 | 13 |
| Example 3 | 2010 | 86.4 | 84 | 87 | 94 | 26 | 11 |
| Example 4 | 1997 | 86.1 | 85 | 87 | 94 | 28 | 14 |
| Example 5 | 1995 | 85.8 | 85 | 88 | 94 | 26 | 12 |
| Comparati ve Example 1 | 1999 | 86.2 | 84 | 87 | 94 | 27 | 12 |
| Comparati ve Example 2 | 1992 | 85.6 | 84 | 87 | 94 | 26 | 13 |

No bubbles and particles were generated during the preparation of the lithium secondary battery positive electrode slurry of Examples 1 to 5, and there is no undesirable phenomenon such as significant de-powdering or powder falling occurred during the preparation of the positive electrode sheet.

It can be seen from the results of Tables 1 and 2 that the lithium secondary batteries of Examples 1 to 5 all had better rate and cycle performance. This indicates that the lithium secondary battery positive electrode slurry of Examples 1 to 5 can ensure the non-toxic and non-irritating, while ensuring the electrochemical property and service life of the prepared lithium secondary battery. The aforementioned lithium secondary battery positive electrode slurry can replace the conventional lithium secondary battery positive electrode slurry using NMP as an organic solvent, reducing the harm caused by NMP

Each technical features of the above embodiments can be arbitrarily combined. For simplifying the description, all possible combinations of each technical features in the embodiments are not described. However, as long as there is no contradiction in the combination of these technical features, they should be fallen within the scope of this description.

Although the invention is illustrated and described herein with reference to specific embodiments, the invention is not intended to be limited to the details shown. Rather, various modifications may be made in the details within the scope and range of equivalents of the claims and without departing from the invention.

## Claims

1. A lithium secondary battery positive electrode slurry, comprising a positive electrode active material, a conductive agent, a binder, and an organic solvent, the organic solvent having a structure as shown in formula (I): 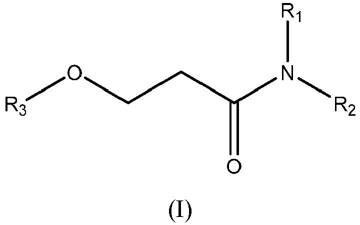 wherein R₃ is C1-C6 alkyl;
R₁ and R₂ are each independently hydrogen, C1-C6 alkyl or C1-C6 ether bond hydrocarbon group; R₁ and R₂ and nitrogen atom connected thereto are capable of being bonded to form a cyclic structure.

2. The lithium secondary battery positive electrode slurry according to claim 1, wherein the organic solvent is at least one selected from the group consisting of 3-methoxy-N, N-dimethylpropionamide, 3-ethoxy-N, N-diethylpropionamide, 3-methoxy-N, N-diethylpropionamide, 3-butoxy-N, N-dimethylpropionamide, and 3-methoxy-N, N-dibutylpropionamide.

3. The lithium secondary battery positive electrode slurry according to claim 1, wherein in the lithium secondary battery positive electrode slurry, by a weight percent, a content of the positive electrode active material ranges from 96.0% to 97.0%, a content of the conductive agent ranges from 2.0% to 2.5%, and a content of the binder ranges from 0.5% to 2.0%.

4. The lithium secondary battery positive electrode slurry according to any one of claims 1 to 3, wherein the positive electrode active material is a lithium-containing transition metal compound;
The lithium-containing transition metal compound is at least one selected from the group consisting of Li₁₊ₐ(NiₓCo_{y}M_{1-x-y})O₂, Li(NiₚMnqCo_{2-p-q})O₄, and LiMe_{b}(PO₄)_{c};
wherein 0≤a≤0.3, 0≤x≤1, 0≤y≤1, 0<x+y≤1, 0≤p≤2, 0≤q≤2, and 0<p+q≤2;
M is Mn or Al;
Me is Fe, Ni, Co, Mn or V; and
0<b<5, 0<c<5.

5. The lithium secondary battery positive electrode slurry according to any one of claims 1 to 3, wherein the conductive agent is at least one selected from the group consisting of acetylene black, graphite conductive agent, carbon black, and carbon nanotube; and/or the binder is polyvinylidene fluoride.

6. A method for preparing the lithium secondary battery positive electrode slurry according to any one of claims 1 to 5, comprising the following steps:
mixing the binder with the organic solvent, stirring evenly, and standing still to obtain a colloid;
adding the conductive agent to the colloid, stirring evenly, and then adding the positive electrode active material;
adding the organic solvent to adjust a viscosity to be 5000mPa.s to 7000mPa.s, to obtain a lithium secondary battery positive electrode slurry primary product;
passing the lithium secondary battery positive electrode slurry primary product through a 100-150 mesh sieve, and obtaining the lithium secondary battery positive electrode slurry.

7. The method according to claim 6, wherein prior to mixing the binder with the organic solvent, the method further comprises a step of pre-drying: pre-drying the positive electrode active material and the conductive agent at 150°C to 180°C for 24h to 48h, respectively, and pre-drying the binder at 60°C to 100°C for 20h to 24h.

8. A use of the lithium secondary battery positive electrode slurry according to any one of claims 1 to 5 in preparing a lithium secondary battery.

9. A lithium secondary battery comprising a positive electrode sheet prepared by the lithium secondary battery positive electrode slurry according to any one of claims 1 to 5.
